# EUROPÄISCHE PATENTSCHRIFT

(11) **EP 1 924 479 B1**
(45) Veröffentlichungstag und Bekanntmachung des Hinweises auf die Patenterteilung: **17.03.2010**
(21) Anmeldenummer: 06805682.9
(22) Anmeldetag: 09.09.2006
(51) Int. Cl.: B62B 3/14, A47D 1/10

(54) **EINKAUFSWAGEN**
SHOPPING TROLLEY
CHARIOT D'ACHAT

(30) Priorität: 14.09.2005 DE 102005043994
(43) Veröffentlichungstag der Anmeldung: 28.05.2008
(73) Patentinhaber: Wanzl Metallwarenfabrik GmbH, 89336 Leipheim (DE)
(72) Erfinder: MAATZ, Bernhard, 86153 Augsburg (DE); RIESENEGGER, Markus, 89358 Kammeltal (DE); SCHEFFLER, Hans, 89233 Burlafingen (DE)
(86) Internationale Anmeldenummer: PCT/EP2006/008795
(87) Internationale Veröffentlichungsnummer: WO 2007/031242

(56) Entgegenhaltungen:
- DE-U1- 8 511 417
- DE-U1- 9 202 264
- DE-U1- 20 308 804
- DE-U1- 29 617 492
- US-A- 5 385 387

## Beschreibung

Die Erfindung betrifft einen Einkaufswagen mit einer Babyschale wie er in Selbstbedienungsgeschäften Verwendung findet mit den Merkmalen des 1. Anspruchs.

Einkaufswagen dieser Art finden in zahlreichen Selbstbedienungsgeschäften Verwendung. Das Ziel dieser Einkaufswagen mit Babyschalen liegt darin, jede Babyschale so anzuordnen, dass ein Säugling angenehm darin liegen kann. Deshalb sind die Babyschalen nicht zu steil und auch nicht zu flach gestaltet. Um dies zu erreichen, ist eine Querverbindung zwischen den Korbseiten des Einkaufswagens angeordnet, welche als Auflage für jede Babyschale dient. Daher weisen die Babyschalen meist Vorrichtungen auf, um die Querverbindungen und insbesondere die Rohre der Querverbindungen aufnehmen zu können. Zusätzlich zu den Querverbindungen gibt es meist andere Auflager, für die üblicherweise ein oberster Querdraht des Einkaufswagens Verwendung findet. Eine Babyschale gemäß dem Oberbegriff von Anspruch 1 ist in der deutschen Gebrauchsmusterschrift DE 203 08 804 U1 beschrieben.

Um ein weiches Liegen des Babys in der Babyschale zu gewährleisten, ist eine Polsterung vorgesehen. Eine Babyschale mit einer solchen Polsterung ist beispielsweise aus der EP 0 835 621 A3 bekannt. Sie ist lösbar mit der Babyschale verbunden. Hierfür weist jede Polsterung Klettverschlussstücke auf. An der Babyschale sind ebenfalls spiegelbildlich Klettverschlussstücke angeordnet.

Weitere Beispiele zum Stand der Technik liefern die beiden Produkte der Anmelderin, die Babyschalen Comfort und Eco. Die Babyschale Eco weist ein Drahtgestänge auf, das am äußeren Rand der Babyschale herum verläuft. Weiterhin sind Vorrichtungen vorgesehen, die für das Abstützen der Babyschale auf dem obersten Draht des Korbes an der Vorderseite eines Einkaufswagens Verwendung finden. Andere Auflager sind vorgesehen, die in Form von Querverbindungen zwischen zwei gegenüberliegenden Seitenwänden des Korbes gestaltet sind. Zur Aufnahme dieser Querverbindung weist die Babyschale Vorrichtungen auf.

Die Babyschale Comfort demgegenüber weist ein Gestänge im Inneren der Babyschale auf. Zum Abstützen der Babyschale auf dem Korb des Einkaufswagens sind ebenfalls Auflager in Form von Querverbindungen zwischen zwei gegenüberliegenden Seitenwänden gestaltet. Die Babyschale weist Vorrichtungen zur Aufnahme der Querverbindungen auf, und eine weitere zusätzliche Einrichtung zum Abstützen der Babyschale an der Vorderseite des Einkaufswagens.

Die Montage der Babyschale am Einkaufswagen erweist sich bei allen Arten von Babyschalen als aufwendig und erfordert zahlreiche zusätzliche Bauteile zum Befestigen der Babyschale am Einkaufswagen. Auch ist die Fertigung der Babyschale selbst aufwendig und kostenintensiv.

Die Aufgabe der Erfindung besteht daher darin, eine bessere Babyschale aufzuzeigen.

Die Erfindung löst diese Aufgabe mit den Merkmalen in Anspruch 1.

Die Teilevielfalt ist durch die vorgeschlagene Lösung reduziert. Weiterhin erweist sich die Montage als einfacher. Durch diese beiden Vorteile ist eine Kostenersparnis zu erzielen.

Die Erfindung wird anhand von Ausführungsbeispielen näher erläutert. Es zeigt
- Fig. 1: eine Babyschale in 3-D-Ansicht,
- Fig. 2: dieselbe Babyschale in Seitenansicht;
- Fig. 3: dieselbe Babyschale in einer weiteren Seitenansicht sowie
- Fig. 4: ein Querschnitt der Babyschale.

Jede Babyschale 6 ist zum Tragen eines Säuglings während des Einkaufens bestimmt. Sie ist zum lösbaren Anbringen an einen nicht näher dargestellten Einkaufswagen bestimmt. Jede Babyschale 6 ist von ihrer Form und Größe derart gebildet, dass ein Säugling bequem darin liegen kann. Zur Sicherung des Säuglings gegen Herunterfallen ist vorzugsweise ein Gurt vorgesehen, der ortsfest an der Babyschale 6 angebracht ist.

Jede Babyschale 6 weist ein Fußende 6.1 auf. Dieses zeigt entgegengesetzt der üblichen Fahrtrichtung. Somit kann jederzeit der Säugling vom Schiebenden des Einkaufswagens beobachtet werden. Zum Anbringen der Babyschale 6 an einen Einkaufswagen weist jede Babyschale wenigstens eine Aufnahme 6.3 auf.

Jeder Einkaufwagen weist einen Korb auf. Dieser ist aus Drähten gebildet. Vorzugsweise bietet sich der oberste Draht des Korbes an der Vorderseite des Einkaufwagens zur Aufnahme der Babyschale 6 an. Auch der Schiebegriff könnte zur Aufnahme der Aufnahmen 6.3 der Babyschalen 6 Verwendung finden.

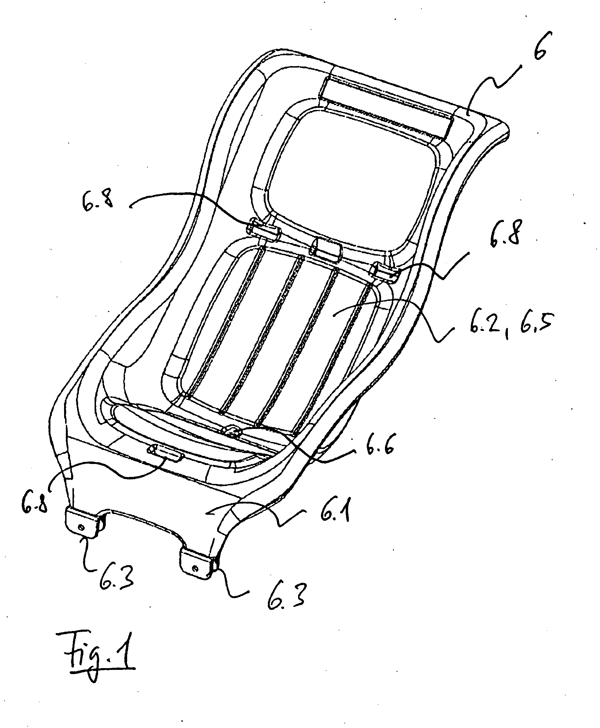

In Fig. 1 ist eine Babyschale 6 in 3-D-Darstellung mit Aufnahme 6.3 dargestellt. Die Aufnahmen 6.3 sind am Fußende 6.1 vorgesehen. Es sind zwei Aufnahmen 6.3 abgebildet. Beide sind nach unten offen ausgebildet. Daher ist ein einfaches Anbringen an einem der obersten Drahtstäbe des Korbes möglich. Zur Sicherung gegen ein Verrutschen ist dann eine Schraubverbindung sinnvoll. Hierfür weist jede Aufnahme 6.3 wenigstens eine Öffnung auf. Eine andere Anzahl an Aufnahmen 6.3 als die dargestellte ist auch denkbar. Auch könnten andere Mittel gegen ein Verrutschen Verwendung finden.

Jede Babyschale 6 weist weiterhin ein Rückenteil 6.2 auf. Durch dieses ist eine bequeme Lage des Säuglings gewährleistet. An der Rückseite der Babyschale 6 sind Vorrichtungen 6.4 vorzusehen, die ein weiteres Abstützen der Babyschale 6 auf dem Korb des Einkaufswagens ermöglichen.

Jeder Einkaufswagen ist zur Aufnahme der Babyschale 6 mit einer Querverbindung ausgestattet. Zur Fixierung der Querverbindung am Einkaufswagen sind an den Seitenwänden des Korbes zwei gegenüberliegende und lösbare Befestigungselemente vorzusehen. Jede Querverbindung ist dann vorzugsweise mit einem Stützabschnitt ausgestattet, der jeweils mittels des Befestigungselementes an dem Korb angeordnet ist. Dieser Stützabschnitt trägt ein Rohr, das um die Längsachse des Stützabschnittes drehbar gelagert ist. An diesem Rohr ist die Babyschale 6 anzuordnen. Hierfür weist jede Babyschale 6 Vorrichtungen 6.4 auf. Die Vorrichtungen 6.4 sind somit derart zu gestalten, dass sie zur Aufnahme dieses Rohres dienen. Die Anzahl kann verschieden sein, in der Darstellung sind zwei Vorrichtungen 6.4 gewährt worden.

Die Innenfläche 6.5 der Babyschale 6 ist mit einer Polsterung 6.7 versehen. Babyschale 6 und Polsterung 6.7 bilden eine Einheit. Die Polsterung 6.7 ist ortsfest mit der Innenfläche 6.5 der Babyschale 6 verbunden. Ein Herausnehmen der Polsterung 6.7 ist somit nicht möglich. Zum Schutz vor UV-Strahlung ist die Polsterung 6.7 mit einem Lack versehen. Dieser Lack wird während des Fertigungsprozesses auf die Oberseite der Polsterung 6.7 aufgebracht. Der Lack dient zum Schutz der Polsterung insbesondere gegen UV-Licht. Um die Beständigkeit des Lackes zu gewährleisten, wird der Lack vorzugsweise mittels In-Mould-Coating aufgetragen. Dieses Verfahren hat den Vorteil, dass die Lackierung der Polsterung 6.7 bereits im Werkzeug erfolgt. Der Lack wird auf die Seite des Werkzeuges aufgetragen, die die Sichtseite des Formteiles abbildet. Die bereits vorgefertigte Babyschale 6 wird in die Form eingelegt. Danach wird die Form geschlossen und der Schaum für die Polsterung 6.7 eingesprüht. Vorzugsweise findet ein PUR-Schaum Verwendung. Nach Ablauf der Reaktionszeit, das heißt nach dem Aushärten des Schaums, kann die fertige Babyschale 6 dem Werkzeug entnommen werden.

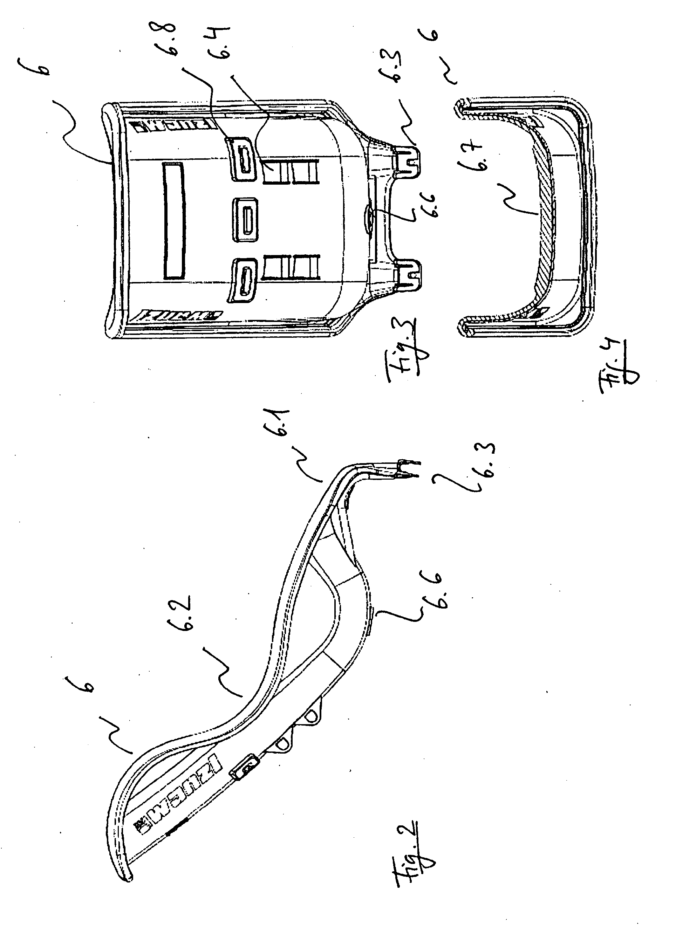

Die Stärke der Polsterung 6.7 kann in Abhängigkeit von dem Werkzeug unterschiedlich ausgebildet sein. In Fig. 4 ist beispielhaft das Verhältnis von Babyschale 6 und Polsterung 6.7 dargestellt. Vorzugsweise ist die Polsterung 6.7 über den Rand der Babyschale 6 hinaus angeordnet. Dies bietet einen zusätzlichen Schutz und verhindert ein mögliches Lösen der Polsterung 6.7.

Jede Babyschale 6 ist einteilig geformt. Vorzugsweise ist jede Babyschale 6 aus Spritzguss gefertigt. Dadurch ist eine Stabilisierung der Babyschale 6 mit einem Stahlgestänge, im Inneren der Babyschale oder um die Babyschale herum laufend, wie es bisher üblich ist, nicht mehr notwendig. Das erspart Material und ermöglicht eine kostengünstigere Herstellung.

Die Bauteile Aufnahme 6.3 und Vorrichtung 6.4 sind Bestandteile der Babyschale 6 selbst. Dadurch kann die Babyschale 6 in vereinfachter Weise an den Einkaufswagen angebracht werden.

Weiterhin sind Aussparungen an der Babyschale 6 vorgesehen. Diese sind in den Figuren 1 bis 3 dargestellt.

Eine Aussparung dient als Flüssigkeitsablauf 6.6. Sie ist vorzugsweise am tiefsten Punkt vorzusehen. Weiterhin sind Öffnungen 6.8 vorgesehen. Diese sind von der Polsterung 6.7 nahezu ausgefüllt, sie weisen lediglich Raum für die Aufnahme eines Gurtes auf.

In einer weiterführenden Ausführungsform ist die Babyschale zum Anbringen an Kunststoffwagen vorgesehen. Die Aufnahmen 6.3 sind dann entsprechend anzupassen.

### Bezugszeichenliste

- 6: Babyschale
- 6.1: Fußende
- 6.2: Rückenteil
- 6.3: Aufnahme
- 6.4: Vorrichtung
- 6.5: Innenfläche
- 6.6: Flüssigkeitsablauf
- 6.7: Polsterung
- 6.8: Öffnungen

## Patentansprüche

1. Einkaufswagen mit einem Korb und mit mindestens einer oberhalb des Korbes angeordneten Babyschale (6), wobei die Babyschale (6) mit ihrem Fußende (6.1) an der Vorderseite des Einkaufwagens und mit ihrem Rückenteil (6.2) an einer Querverbindung abgestützt ist und wobei ferner das Fuβende (6.1) der Babyschale (6) zur formschlüssigen Aufnahme am Einkaufswagen (1) wenigstens eine Aufnahme (6.3) aufweist, **dadurch gekennzeichnet, dass** die Babyschale (6) eine Polsterung (6.7) aufweist, wobei die einteilig gebildete Babyschale (6) mit der Polsterung (6.7) eine nicht lösbare Einheit bildet, wobei die Polsterung (6.7) an der Innenfläche (6.5) der Babyschale (6) angeordnet ist und wobei jede Aufnahme (6.3) nach unten offen ausgeführt ist.

2. Einkaufswagen mit mindestens einer Babyschale nach Anspruch 1, **dadurch gekenntzeichnet, dass** jede Aufnahme (6.3) wenigstens eine Öffnung (6.8) für Befestigungsmittel vorsieht.

3. Einkaufswagen mit mindestens einer Babyschale nach einem der Ansprüche 1 oder 2, **dadurch gekennzeichnet, dass** die Babyschale (6) zum Anordnen am Einkaufswagen Vorrichtungen (6.4) aufweist.

4. Einkaufswagen mit mindestens einer Babyschale nach einem der Ansprüche 1 bis 3, **dadurch gekennzeichnet, dass** die Babyschale (6) einen Flüssigkeitsablauf (6.6) aufweist.

5. Einkaufswagen mit mindestens einer Babyschale nach einem der Ansprüche 1 bis 4, **dadurch gekennzeichnet, dass** die Babyschale (6) Öffnungen (6.8) für die Aufnahme eines Gurtes aufweist.

6. Einkaufswagen mit mindestens einer Babyschale gemäß einem der Ansprüche 1 bis 5, **dadurch gekennzeichnet, dass** die Babyschale (6) vorzugsweise aus einem Spritzguss gefertigt ist.

7. Einkaufswagen mit mindestens einer Babyschale gemäß einem der Ansprüche 1 bis 6, **dadurch gekennzeichnet, dass** die Polsterung (6.7) z.B. aus einem PUR-Schaum gebildet ist und mittels eines In-Mould-Coating-Verfahrens mit einem Lack versehen wird.

## Claims

1. A shopping trolley having a basket and having at least one infant carrier (6) arranged above the basket, wherein the infant carrier (6) is supported by its base end (6.1) on the front side of the shopping trolley and by its back part (6.2) on a transverse connection and wherein furthermore the base end (6.1) of the infant carrier (6) has at least one receiver (6.3) so as to be received in a positive-locking manner on the shopping trolley (1), **characterised in that** the infant carrier (6) has padding (6.7), wherein the infant carrier (6) formed in one piece forms a non-detachable unit with the padding (6.7), wherein the padding (6.7) is arranged on the inner surface (6.5) of the infant carrier (6), and wherein each receiver (6.3) is open downwards.

2. A shopping trolley with at least one infant carrier according to claim 1, **characterised in that** each receiver (6.3) provides at least one opening (6.8) for securing means.

3. A shopping trolley having at least one infant carrier according to one of claims 1 and 2, **characterised in that** the infant carrier (6) has devices (6.4) for arrangement thereof on the shopping trolley.

4. A shopping trolley having at least one infant carrier according to any one of claims 1 to 3, **characterised in that** the infant carrier (6) has a fluid outlet (6.6).

5. A shopping trolley having at least one infant carrier according to any one of claims 1 to 4, **characterised in that** the infant carrier (6) has openings (6.8) to receive a strap.

6. A shopping trolley having at least one infant carrier according to any one of claims 1 to 5, **characterised in that** the infant carrier (6) is preferably manufactured by injection moulding.

7. A shopping trolley having at least one infant carrier according to any one of claims 1 to 6, **characterised in that** the padding (6.7) is formed e.g. from a PUR foam and is provided with a finish by means of an in-mould coating process.

## Revendications

1. Chariot à provisions comprenant un panier et au moins une coque (6) porte-bébé située au-dessus dudit panier, ladite coque (6) porte-bébé étant en appui par son extrémité inférieure (6.1) contre la face antérieure du chariot à provisions et, par sa partie de dossier (6.2), contre une solidarisation transversale, l'extrémité inférieure (6.1) de la coque (6) porte-bébé étant par ailleurs dotée d'au moins un logement (6.3) en vue d'être reçue par ledit chariot à provisions (1), par concordance de formes, **caractérisé par le fait que** la coque (6) porte-bébé possède un rembourrage (6.7), ladite coque (6) porte-bébé, réalisée d'une seule pièce, formant une unité non dissociable avec ledit rembourrage (6.7), ledit rembourrage (6.7) étant disposé à la face intérieure (6.5) de ladite coque (6) porte-bébé, et chaque logement (6.3) étant de réalisation ouverte vers le bas.

2. Chariot à provisions muni d'au moins une coque porte-bébé, selon la revendication 1, **caractérisé par le fait que** chaque logement (6.3) procure au moins une ouverture (6.8) destinée à des moyens de fixation.

3. Chariot à provisions muni d'au moins une coque porte-bébé, selon l'une des revendications 1 ou 2, **caractérisé par le fait que** ladite coque (6) porte-bébé présente des dispositifs (6.4) en vue de l'implantation sur ledit chariot à provisions.

4. Chariot à provisions muni d'au moins une coque porte-bébé, selon l'une des revendications 1 à 3, **caractérisé par le fait que** ladite coque (6) porte-bébé présente une évacuation (6.6) de substances liquides.

5. Chariot à provisions muni d'au moins une coque porte-bébé, selon l'une des revendications 1 à 4, **caractérisé par le fait que** ladite coque (6) porte-bébé présente des orifices (6.8) conçus pour recevoir une sangle.

6. chariot à provisions muni d'au moins une coque porte-bébé, selon l'une des revendications 1 à 5, **caractérisé par le fait que** ladite coque (6) porte-bébé est, de préférence, venue de moulage par injection.

7. Chariot à provisions muni d'au moins une coque porte-bébé, selon l'une des revendications 1 à 6, **caractérisé par le fait que** le rembourrage (6.7) est, par exemple, formé d'une mousse de polyuréthane et est pourvu d'une laque par un procédé de revêtement sur place, dans un moule.
